Europäisches Patentamt

European Patent Office

Office européen des brevets

(19)

(11) Numéro de publication: **0 071 497**
**B1**

(12)

# FASCICULE DE BREVET EUROPEEN

(45) Date de publication du fascicule du brevet:
20.03.85

(21) Numéro de dépôt: 82401235.5

(22) Date de dépôt: **01.07.82**

(51) Int. Cl.⁴: **A 23 L 1/222,** C 11 B 9/02

(54) Procédé d'extraction, de concentration et de purification d'arômes naturels d'origine végétale et application de ce procédé.

(30) Priorité: 03.07.81 FR 8113185

(43) Date de publication de la demande:
09.02.83 Bulletin 83/6

(45) Mention de la délivrance du brevet:
20.03.85 Bulletin 85/12

(84) Etats contractants désignés:
CH DE FR GB IT LI

(56) Documents cités:
BE - A - 672 380
BE - A - 676 563
FR - A - 2 382 199
GB - A - 1 039 498
GB - A - 1 061 009
US - A - 3 248 233

(73) Titulaire: **COMPAGNIE FRANCAISE DE RAFFINAGE**
Société anonyme dite:, 5, rue Michel-Ange,
F-75781 Paris Cedex 16 (FR)

(72) Inventeur: **Loutaty, Roben, 29, rue Sery, F-76600 Le**
**Havre (FR)**
Inventeur: **Rolland, Christian, 17, rue Bossière,**
**F-76620 Le Havre (FR)**

(74) Mandataire: **Jolly, Jean-Pierre et al, Cabinet**
**BROT 83, rue d'Amsterdam, F-75008 Paris (FR)**

## Description

La présente invention concerne un procédé d'extraction, de concentration et de purification d'extraits aromatiques naturels de grande qualité, d'origine végétale, obtenus notamment à partir de fruits, de légumes, de graines ou de plantes aromatiques.

On sait que les extraits aromatiques naturels peuvent contenir une grande variété de matières très volatiles et très fragiles, qu'il est, à l'heure actuelle, très difficile d'isoler de façon économique sans nuire à la qualité globale de la substance obtenue.

Ainsi, selon un des modes classiques de préparation des arômes naturels, les agrumes ou les plantes aromatiques sont broyés, pressés et filtrés, puis traités à l'aide d'un solvant approprié qu'il convient alors d'éliminer. Parmi les solvants usuels, on utilise de façon courante des alcools, des éthers, des cétones, des hydrocarbures paraffiniques et, enfin, des hydrocarbures halogénés. C'est l'étape de séparation du solvant qui présente le plus de difficultés à résoudre, car les dernières traces de ce solvant imposent, pour leur élimination, des conditions opératoires (accroissement de la température ou forte diminution de la pression) telles que les arômes recherchés sont souvent volatilisés, dégradés ou transformés, au moins partiellement. C'est ainsi que:

— lorsque la pression requise pour la purification est trop faible, c'est-à-dire inférieure à 0,2 bar, les arômes les plus volatils s'échappent et ne peuvent être totalement récupérés;

— lorsque l'on opère à pression atmosphérique, ou à une pression légèrement inférieure, c'est-à-dire au-dessus de 0,2 bar, on admet que certaines températures ne peuvent sans dommage être dépassées; en particulier, avec les agrumes (citrons, pamplemousses, oranges, bergamottes, mandarines, etc.), il convient de ne pas excéder une gamme de température de l'ordre de 30 à 35° C.

Pour éviter ces inconvénients, plusieurs méthodes ont été proposées et mises au point. Ces méthodes nécessitent l'utilisation de solvants à bas point d'ébullition, tels que le dichlorodifluorométhane, commercialisé sous la marque déposée Fréon 12, dont le point d'ébullition est de −29° C . (article de K. Karwowska, dans «Schweizerische Zeitschrift für Obst und Weinbau», 108, pp. 625 à 627, 1972), voire même l'utilisation comme solvant d'un gaz, tel que le gaz carbonique, à l'état surcritique demande de brevet français No 2382199.)

Néanmoins, l'utilisation de ces méthodes n'est pas économique, du fait des faibles rendements d'extraction à basse température, du prix du solvant et de la nature de l'appareillage requis pour travailler dans de telles conditions.

L'objet de la présente invention est de proposer, après l'étape d'extraction, une étape de concentration et de purification d'arômes naturels d'origine végétale à partir notamment de fruits, de légumes, de graines ou de plantes aromatiques, qui permette d'obtenir de façon économique des arômes, dont les propriétés organoleptiques soient conservées en totalité.

Selon la présente invention, on élimine en effet quasi complètement le solvant contenu dans la solution provenant de l'étape d'extraction en combinant la technique de la distillation, qui est utilisée tant que la quantité de solvant est élevée par rapport à celle de l'arôme, avec la technique d'entraînement à l'aide d'un gaz inerte, appelée ci-après strippage, qui permet alors d'éliminer sans dommage le solvant résiduel.

L'invention a par conséquent pour objet un procédé d'extraction, de concentration et de purification d'arômes naturels d'origine végétale, comprenant une étape d'extraction de l'arôme par un solvant approprié, caractérisé en ce que l'on procède ensuite à une séparation partielle par distillation du solvant contenu dans la solution provenant de l'étape d'extraction, en ce que l'on interrompt cette distillation lorsque la concentration de l'arôme dans ladite solution devient telle que la température d'ébullition de la solution risque de dépasser celle du solvant, et en ce que l'on soumet ensuite la solution résiduelle à un strippage par un gaz inerte, en vue d'éliminer le reste du solvant et de récupérer l'arôme naturel à l'état sensiblement pur.

Quel que soit le procédé d'extraction des arômes naturels d'un végétal à l'aide d'un solvant, les extraits contiennent généralement une proportion d'au moins 90% en poids de solvant. Grâce au procédé selon l'invention:

— la distillation de la majeure partie du solvant s'effectue sans élévation de température et, par conséquent, sans risque de détérioration thermique des principes de l'extrait aromatique;

— dès que la proportion des arômes dans le résidu de distillation devient suffisamment importante pour influencer la température, par exemple lorsque la concentration de l'arôme dans le solvant devient supérieure à 25% en poids, le strippage de ce résidu de distillation avec un gaz inerte, tel que l'azote, l'argon ou le gaz carbonique, éventuellement sous pression inférieure à la pression atmosphérique, permet d'éliminer le solvant résiduel, sans augmentation de la température; il permet également d'obtenir des produits très purs répondant aux normes alimentaires, car les teneurs en solvant résiduel sont alors pratiquement nulles;

— le coût de ces deux étapes de concentration et de purification est inférieur au coût d'un strippage au gaz inerte seul, puisque cette dernière opération est limitée au strict nécessaire.

La combinaison conforme à l'invention de techniques de concentration et de purification permet le choix et la mise en œuvre d'un type de solvant spécifique de l'arôme recherché, puisque le point d'ébullition d'un tel solvant peut désormais être choisi aussi proche que possible de la température limite de stabilité de l'extrait aromatique. Ainsi, lorsque l'on conduit l'étape de distillation à la pression atmosphérique, on peut sélectionner des solvants dont le point d'ébullition sera inférieur de quelques degrés seulement à ladite température et, lorsque cette étape est effectuée sous pression réduite, supérieure à 0,2 bar, on peut sélectionner des solvants dont le point d'ébullition sera, pour sa part, supérieur de quelques degrés à ladite température limite de stabilité.

Avec les principaux agrumes, pour lesquels il convient de ne pas dépasser une température de l'ordre de 30 à 35° C, la titulaire a ainsi pu obtenir, de façon particulièrement économique, des arômes naturels de très grande qualité, en effectuant l'extraction avec des solvants dont la température d'ébullition diffère d'au plus 10° C de la température limite de stabilité des principales essences constitutives de l'arôme, par exemple avec de l'isopentane (température d'ébullition, Eb, égale à 27,8° C) et du trichlorofluorométhane (Eb = 24,9° C). En plus de ces derniers solvants, on peut également utiliser, lorsqu'on opère l'étape de distillation à pression réduite, toutefois supérieure à 0,2 bar, des solvants tels que le n-pentane (Eb = 36° C), le diéthyléther (Eb = 34,6° C) ou le dichlorométhane (Eb = 40,1° C), seuls ou en mélanges, par exemple des coupes pétrolières ou mélanges de n-pentane et d'isopentane.

La présente invention permet donc, grâce à cette technique de concentration et de purification de l'extrait aromatique, d'une part, et au choix du solvant spécifique le plus approprié, d'autre part, d'obtenir un extrait aromatique dont la pureté et les propriétés organoleptiques sont tout à fait remarquables, tout en assurant un rendement en extrait aromatique excellent par rapport aux autres méthodes d'extraction d'arômes d'origine végétale.

Les huiles aromatiques obtenues conformément au procédé, après dilution dans des aliments, ont été comparés, d'une part, avec des huiles aromatiques du commerce obtenues de façon usuelle par un procédé d'extraction à la vapeur d'eau, d'autre part, avec des huiles uniquement purifiées par distillation.

Les résultats de ces comparaisons montrent clairement la supériorité des huiles obtenues selon le procédé de la présente invention.

Les exemples qui suivent visent à illustrer plus précisément les divers aspects de cette invention, qu'ils n'entendent en aucune façon limiter.

*Exemple 1:*

On pèse 5 kg de citrons de bonne qualité. Ces derniers sont lavés, triés, coupés en deux, et pressés, ce qui fournit du jus, des pulpes, des pépins et des peaux.

Les 3,09 kg de peaux de citrons sont broyés finement et mélangés à température ambiante avec 5 l d'isopentane.

Après 20 min de contact sous agitation, la bouillie est passée dans un filtre-presse pour séparer les solides et les liquides.

La phase liquide est décantée très facilement en une phase aqueuse et en une phase organique qui contient les arômes.

Cette dernière est placée dans un ballon de 10 l, chauffé électriquement et surmonté d'une colonne de distillation de dix plateaux, qui est elle-même équipée d'un condenseur. Deux thermocouples permettent de surveiller l'évolution des températures, dans le ballon lui-même et en tête de colonne de distillation.

On distille ainsi 4,7 l d'isopentane sous pression atmosphérique sans observer la moindre modification dans les conditions de température, 28° C en tête de colonne et 30° C dans le ballon. Ce distillat ne présente aucune odeur ou trace d'arôme.

Pour ne pas détériorer les qualités de l'arôme de citron par élévation de température du mélange restant, on transvase les 83 cm³ de ce mélange dans une colonne de strippage et l'on y fait barboter 200 Nl/h (Normolitres par heure) d'azote à température ambiante pendant 30 min. L'isopentane ainsi évaporé est recueilli dans un condenseur réfrigéré à l'aide de carboglace; il ne présente pas non plus d'odeur d'arômes.

On recueille ainsi 24,2 g (28,8 cm³) d'huile essentielle de citron d'excellente qualité, ce qui, ramené aux 3,09 kg de peaux, correspond à un rendement de 7,8‰ en poids.

Cette huile a été analysée par chromatographie en phase gazeuse; outre la concentration en isopentane, qui ne dépase pas 80 ppm, les principaux pics identifiés correspondent à:

| | |
|---|---|
| β-pinène | 8,1% |
| γ-terpinène | 10,2% |
| linalol | 1,9% |
| néral | 1,4% |
| géranial | 1,8% |
| acétate de néryle | 0,4% |
| acétate de géranyle | 0,6% |
| limonène | 64,8% |
| autres | 10,8% |
| Total | 100% |

*Exemple 2:*

On prépare et l'on broie, dans les mêmes conditions que dans l'exemple précédent, 4 kg de peaux de citrons et l'extraction des arômes est faire à l'aide de 6,5 l d'isopentane. Après 20 min de contact sous agitation, la bouillie est passée dans un filtre-presse et les solides séparés des liquides.

Après décantation, la phase organique est placée dans le même appareillage que celui décrit dans l'exemple 1.

La distillation est effectuée cette fois-ci sous une pression réduite de 0,4 bar; la température du liquide ne dépasse alors pas 10° C dans le ballon.

Les 80 cm³ de phase liquide résiduelle sont transvasés dans la même colonne de strippage que dans l'exemple précédent, dans laquelle on fait barboter 30 Nl/h d'azote sous une pression de 0,04 bar à température ambiante.

On recueille ainsi 29,7 g d'huile essentielle de citron d'excellente qualité, ce qui, ramené aux 4 kg de peaux initiales, correspond à un rendement de 7,43‰ en poids.

En chromatographie en phase gazeuse, les principaux pics identifiés correspondent à:

| | |
|---|---|
| β-pinène | 11,5% |
| γ-terpinène | 9,7% |
| linalol | 0,4% |
| néral | 1,2% |
| géranial | 1,7% |
| acétate de néryle | 0,3% |
| acétate de géranyle | 0,5% |
| limonène | 66,2% |
| autres | 8,5% |
| Total | 100% |

D'autre part, la teneur en isopentane ne dépasse pas 70 ppm.

*Exemple 3:*

On utilise cette fois-ci 6 kg de peaux de citrons, que l'on traite avec 6,3 l de trichlorofluoro-méthane.

Toujours avec le même appareillage que précédemment, la distillation est effectuée à pression atmosphérique, sans que la température ne dépase 27° C dans le ballon et 25° C en haut de colonne.

Les 110 cm³ de phase liquide résiduelle sont soumis à un strippage par barbotage d'azote à 200 Nl/h, pendant 30 min et sous pression atmosphérique, à température ambiante.

L'huile essentielle ainsi obtenue pèse 32 g, ce qui correspond à un rendement, par rapport au poids de peaux initiales, de 5,35‰.

Cette huile est analysée: la teneur en trichlorofluorométhane ne dépasse pas 80 ppm, et l'identification des pics en chromatographie en phase gazeuse donne les résultats suivants:

| | |
|---|---|
| β-pinène | 8,3% |
| γ-terpinène | 10,1% |
| linalol | 1,7% |
| néral | 1,1% |
| géranial | 1,4% |
| acétate de néryle | 0,4% |
| acétate de géranyle | 0,4% |
| limonène | 65,7% |
| autres | 10,9% |
| Total | 100% |

*Exemple 4:*

Dans cet exemple, on remplace le citron de départ par des mandarines de bonne qualité du commerce; 15 kg de fruits sont ainsi triés, puis broyés directement.

Les phases liquides et solides sont séparées et chacune d'elles est extraite individuellement, à l'aide de 7,5 l de trichlorofluorométhane.

La majeure partie du solvant est distillée sous pression réduite, 0,4 bar, la température du liquide ne dépassant pas 10° C dans le ballon.

Les 400 cm³ de phase liquide résiduelle sont ensuite strippés par barbotage d'azote à 30 Nl/h, pendant 1 h, sous une pression de 0,2 bar, à température ambiante.

On obtient ainsi 116 g d'huile essentielle, ce qui représente, par rapport au poids de fruits total, un rendement de 7,7‰.

Les traces résiduelles de solvant ne dépassent pas 90 ppm et les qualités organoleptiques de cet extrait aromatique sont qualifiées de remarquables par les spécialistes.

*Exemple 5:*

On prépare cette fois un extrait aromatique à partir d'ananas.

Avec 17,2 kg de fruits au départ, l'extraction est faite avec 8 l de trichlorofluorométhane.

Les conditions d'extraction, de distillation de la majeure partie du solvant, et celles du strippage sont identiques à celles de l'exemple 4.

On obtient ainsi 1,9 g d'huile essentielle, ce qui représente, par rapport au poids de fruits total, un rendement de 0,11‰. Cette huile est également d'excellente qualité organoleptique et sa teneur en solvant est inférieure à 90 ppm.

## Revendications

1. Procédé d'extraction, de concentration et de purification d'arômes naturels d'origine végétale, comprenant une étape d'extraction de l'arôme par un solvant approprié, caractérisé en ce que l'on procède ensuite à une séparation partielle par distillation du solvant contenu dans la solution provenant de l'étape d'extraction, en ce que l'on interrompt cette distillation lorsque la concentration de l'arôme dans ladite solution devient telle que la température d'ébullition de la solution risque de dépasser celle du solvant pur, et en ce que l'on soumet ensuite la solution résiduelle à un strippage par un gaz inerte, en vue d'éliminer le reste du solvant et de récupérer l'arôme naturel à l'état sensiblement pur.

2. Procédé selon la revendication 1, caractérisé en ce que la distillation est effectuée sous une pression comprise entre 0,2 bar et la pression atmosphérique.

3. Procédé selon l'une des revendications 1 ou 2, caractérisé en ce que l'on procède au strippage au gaz dès que, au cours de l'étape de distillation, la concentration de l'arôme dans le solvant devient supérieure à 25% en poids.

4. Procédé selon l'une des revendications 1 à 3, caractérisé en ce que l'étape de strippage au gaz inerte est conduite sous une pression inférieure à la pression atmosphérique.

5. Procédé selon l'une des revendications 1 à 4, caractérisé en ce que le gaz inerte utilisé pour le strippage est l'azote, l'argon ou le gaz carbonique.

6. Procédé selon l'une des revendications 1 à 5, caractérisé en ce que le solvant a une température d'ébullition différant d'au plus 10° C de la température limite de stabilité des principales essences constitutives de l'arôme.

7. Procédé selon l'une des revendications 3 à 5, caractérisé en ce que le solvant d'extraction est l'isopentane, le trichlorofluorométhane, l'éther diéthylique, le n-pentane, le dichlorométhane, seuls ou en mélanges, en particulier des coupes pétrolières ou des mélanges de n-pentane et d'isopentane.

8. Application du procédé suivant l'une des revendications 1 à 7, à l'extraction des arômes de fruits, de légumes, de graines ou de plantes aromatiques.

9. Application suivant la revendication 8, à l'extraction des arômes de fruits choisis dans le groupe comprenant les citrons, les pamplemousses, les oranges, les mandarines ou l'ananas.

## Claims

1. A process for extracting, concentrating and purifying natural aromas of vegetable origin, comprising a step for extracting the aroma by means of an appropriate solvent, characterized in that a partial separation is then carried out by distillation of the solvent contained in the solution coming from the extraction stage, in that this distillation is interrupted when the concentration of the aroma in said solution becomes such that the boiling temperature of the solution risks exceeding that of the pure solvent and in that the residual solution is then stripped by means of an inert gas for eliminating the rest of the solvent and recovering the natural aroma in the substantially pure state.

2. Process according to Claim 1, characterized in that the distillation is carried out at a pressure between 0.1 bar ans atmospheric pressure.

3. Process according to one of Claims 1 or 2, characterized in that gas stripping is carried out as soon as the concentration of the aroma in the solvent becomes greater than 25% by weight during the distillation step.

4. Process according to one of Claims 1 to 3, characterized in that the inert gas stripping step is conducted at a pressure less than atmospheric pressure.

5. Process according to one of Claims 1 to 4, characterized in that the inert gas used for stripping is nitrogen, argon or carbonic gas.

6. Process according to one of Claims 1 to 5, characterized in that the solvent has a boiling temperature differing by 10° C at most from the maximum temperature of stability of the main essences forming the aroma.

7. Process according to one of Claims 3 to 5, characterized in that the extraction solvent is isopentane, trichlorofluoromethane, diethylether, n-pentane, dichloromethane, alone or in mixtures, in particular petroleum cups or mixtures of n-pentane and isopentane.

8. Application of the process according to one of Claims 1 to 7 to the extraction of aromas from fruits, vegetables, seeds or aromatic plants.

9. Application according to Claim 8 to the extraction of aromas from fruits chosen from the group comprising lemons, grepefruits, oranges, mandarines or pineapples.

## Patentansprüche

1. Verfahren zur Extraktion, Konzentration und Reinigung von natürlichen Aromas pflanzlichen Ursprungs mit einem Extraktionsschritt, bei welchem das Aroma mittels eines geeigneten Lösungsmittels extrahiert wird, dadurch gekennzeichnet, dass danach das in der von der Extraktionsstufe herrührenden Lösung enthaltene Lösungsmittel durch Destillation partiell abgetrennt wird, dass die Destillation unterbrochen wird, sobald die Konzentration des Aromas in der Lòsung einen solchen Wert erreicht, bei welchem die Siedetemperatur der Lösung Gefahr läuft, diejenige des reinen Lösungsmittels zu überschreiten, und dass die restliche Lösung dann einem Strippen mit einem inerten Gas unterworfen wird, um den Rest des Lösungsmittels zu entfernen und das natürliche Aroma in im wesentlichen reinem Zustand zu gewinnen.

2, Verfahren nach Anspruch 1, dadurch gekennzeichnet, das die Destillation bei einem Druck zwischen 0,2 bar und Atmosphärendruck durchgeführt wird.

3. Verfahren nach einem der Ansprüche 1 oder 2, dadurch gekennzeichnet, dass das Gasstrippen erfolgt, sobald beim Destillationsschritt die Konzentration des Aromas im Lösungsmittel grösser als 25 Gew.-% wird.

4. Verfahren nach einem der Ansprüche 1 bis 3, dadurch gekennzeichnet, dass das Inertgasstrippen bei einem Druck geringer als Atmosphärendruck durchgeführt wird.

5. Verfahren nach einem der Ansprüche 1 bis 4, dadurch gekennzeichnet, dass zum Strippen Stickstoff, Argon oder Kohlendioxyd als inertes Gas verwendet wird.

6. Verfahren nach einem der Ansprüche 1 bis 5, dadurch gekennzeichnet, dass das Lösungsmittel eine Siedetemperatur aufweist, welche sich um höchstens 10° C von der Stabilitätsgrenztemperatur der das Aroma bildenden Hauptessenzen unterscheidet.

7. Verfahren nach einem der Ansprüche 3 bis 5, dadurch gekennzeichnet, dass es sich beim Extraktionslösungsmittel um Isopentan, Trichlorfluormethan, Diäthyläther, n-Pentan, Dichlormethan, allein oder in Mischung, insbesondere um Erdölfraktionen oder n-Pentan/Isopentan-Mischungen, handelt.

8. Anwendung des Verfahrens nach einem der Ansprüche 1 bis 7 auf die Extraktion der Aromas von Obst, Gemüse, Getreide oder aromatischen Pflanzen.

9. Anwendung nach Anspruch 8 auf die Extraktion der Aromas von Obst, nämlich von Zitronen, Pampelmusen, Orangen, Mandarinen oder Ananas.